# EUROPEAN PATENT APPLICATION

(11) **EP 2 800 339 A1**
(43) Date of publication of application: **05.11.2014**
(21) Application number: 13743117.7
(22) Date of filing: 30.01.2013
(51) Int. Cl.: H04L 29/08

(54) **INTERNET OF THINGS RESOURCE ACQUISITION METHOD, CLIENT AND INTERNET OF THINGS RESOURCE DEVICE**

(30) Priority: 30.01.2012 CN 201210021088
(71) Applicant: Huawei Technologies Co., Ltd, Shenzhen, Guangdong 518129 (CN)
(72) Inventor: TIAN, Linyi, Shenzhen Guangdong 518129 (CN); YUE, Peiyu, Shenzhen Guangdong 518129 (CN)
(74) Representative: Maiwald Patentanwalts GmbH
(86) International application number: PCT/CN2013/071118
(87) International publication number: WO 2013/113275

(57) **Abstract**

The present invention provides a method for acquiring machine-to-machine resources, including: receiving a resource acquisition request sent by a client, and acquiring multiple resource identifiers according to the resource acquisition request; acquiring resource data on resource devices corresponding to the multiple resource identifiers; and encapsulating the acquired resource data into a message and sending the message to the client. Therefore, multiple resource identifiers may be sent at a time, and the resource data returned by the resource devices corresponding to the multiple resource identifiers is sent to a requester by using one message. The resource data is acquired quickly and efficiency of acquiring the resource data is high.

## Description

### CROSS-REFERENCE TO RELATED APPLICATION

This application claims priority to Chinese Patent Application No. 201210021088.6, filed on January 30, 2012 and entitled "METHOD AND CLIENT FOR ACQUIRING MACHINE-TO-MACHINE RESOURCES AND MACHINE-TO-MACHINE RESOURCE APPARATUS", which is incorporated herein by reference in its entirety.

### TECHNICAL FIELD

Embodiments of the present invention relate to the field of communications technologies, and in particular, to a method and client for acquiring machine-to-machine resources and a machine-to-machine resource apparatus.

### BACKGROUND

The Internet of things is an important part of a new-generation information technology. Its English name is: "The Internet of things". Therefore, as the name implies, "the Internet of things is an Internet of interconnected things". It has two meanings: First, the Internet is still a core and basis of the Internet of things, and the Internet of things is a network extended on the basis of the Internet; second, its user end is extended to perform information exchange and communication between any items. Therefore, the Internet of things is defined as a network that connects, according to an agreed protocol by using information sensing devices such as a radio frequency identification (RFID)module, an infrared sensor, a global positioning system, and a laser scanner, any item with the Internet to perform information exchange and communication to implement intelligent identification, locating, tracking, monitoring, and management of items.

A Constrained Application Protocol (Constrained Application Protocol, CoAP) is an interaction protocol defined by the IETF for acquiring resources in a machine-to-machine system. Resources may be data of a sensor in a machine-to-machine device, for example, data of a smart meter, or any information such as configuration information in a device or data of an embedded operating system. The CoAP protocol, may work with Link Format metadata, and a SenML language to acquire metadata. information and actual data of a machine-to-machine sensor. The CoAP may also work with a ZigBee Profile defined by the ZigBee Alliance or other formats to acquire data corresponding to a machine-to-machine industry application, for example, a smart grid, a smart home, logistics, agriculture, and animal husbandry.

The SenML is a markup language indicating sensor parameters, and its data model is based on JSON (Java Script Object Notation), and is denoted by "name-value " pairs. The SenML defines some semantic elements shown in Table 1.

**Table 1 Greek alphabet**

| **Attribute** | **Meaning** | **Remarks** |
|---|---|---|
| bn (base name) | Prepended name | It is a name prepended to a name found in an entry. |
| bt (base time) | Reference time | This time is added to the time found in an entry. |
| bu (base units) | Default unit | The default unit is used unless otherwise specified. |
| v (version) | Format version | Media type version, which is 1 by default. |
| Measurement or parameter entries | Used to store measurement data of a sensor | Array form. |

Attributes of measurement data shown in Table 1 include:

| Measurement Data Element | Meaning | Remarks |
|---|---|---|
| n (name) | Nameofa sensor or sensor parameter | It must be a globally unique identifier after being combined with the base name. |
| u (units) | Unit of measure | -- |
| v (value) | Measurement data value | -- |
| s (sum) | Sum of values | -- |
| t (time) | Time of recording a measurement value | -- |
| ut (update time) | Time of updating measurement data | It is a longest time interval for updating measurement data by a sensor. |

The IETF defines a Link Format to associate sensor-related metadata, for example,

```
               </sensors/temp>;rt="TempSensor(temperature sensor)"; if="sensor",
               </sensors/light>;rt="LightSensor(light sensor)"; if="sensor"
```

where, </sensors/temp> indicates an access path of a sensor, rt indicates a resource type (resource type), and if indicates an access interface (interface). For example, the foregoing link format document describes a device including two sensors, that is, a temperature sensor and a light sensor respectively. A description about rt adds semantic information to the sensors, for example, a unit corresponding to the temperature sensor is a degree Celsius, and a corresponding interface may be a WADL (Web Application Description Language, Web application description language) file describing how to operate resources.

### Multiple sensors may exist on a device, for example, in the following scenarios:

1. A robot is connected to multiple sensors, for example, a light sensor, a sound sensor, a compass sensor, and an acceleration sensor.
2. A family has multiple rooms, and each room may have different sensors, for example, a temperature sensor, a humidity sensor, and a light sensor.

Because data of the multiple sensors on the device is usually correlated, an application usually requires the data of the multiple sensors simultaneously. For example, to query an environment of a room, it is necessary to acquire the data of the temperature sensor as well as the data of the humidity sensor.

During implementation of the present invention, the inventors find that the prior art has the following disadvantages: In a method for acquiring resource data on a sensor in the prior art, acquisition of resource data is slow, and efficiency is low.

### SUMMARY

Embodiments of the present invention provide a method for acquiring machine-to-machine resources. Therefore, resource data on the Internet of things can be acquired quickly and efficiency of acquiring the resource data is high.

An embodiment of the present invention provides a method for acquiring machine-to-machine resources, including: receiving a resource acquisition request sent by a client, and acquiring multiple resource identifiers according to the resource acquisition request; acquiring resource data on resource devices corresponding to the multiple resource identifiers; and encapsulating the acquired resource data into a message and sending the message to the client.

An embodiment of the present invention provides a method for acquiring machine-to-machine resources, including the following steps: receiving a resource data subscription request sent by a client, and acquiring multiple resource identifiers according to the resource data subscription request; acquiring data on resource devices corresponding to the multiple resource identifiers; and encapsulating the acquired resource data into a message and sending the message to the client.

An embodiment of the present invention provides a method for acquiring machine-to-machine resources, including: sending a resource acquisition request to a server, and acquiring multiple resource identifiers according to the resource acquisition request; and receiving resource data, returned by the server, on devices corresponding to the multiple resource identifiers; where the resource data is acquired by the server, according to the multiple resource identifiers, from the resource devices corresponding to the multiple resource identifiers.

An embodiment of the present invention provides a method for acquiring machine-to-machine resources, including: sending a resource data subscription request to a server, so that the server acquires multiple resource identifiers according to the resource data subscription request; and receiving resource data, returned by the server, on devices corresponding to the multiple resource identifiers; where the resource data is acquired by the server, according to the acquired multiple resource identifiers, from the resource devices corresponding to the multiple resource identifiers.

An embodiment of the present invention provides a resource apparatus, including: a first receiving unit, configured to receive a resource acquisition request sent by a client, and acquire multiple resource identifiers according to the resource acquisition request; a resource acquiring unit, configured to acquire resource data on resource devices corresponding to the multiple resource identifiers; and a first sending unit, configured to encapsulate the acquired resource data into a message and send the message to the client.

An embodiment of the present invention provides a resource apparatus, including: a first receiving unit, configured to receive a resource data subscription request sent by a client, and acquire multiple resource identifiers according to the resource data subscription request; a resource acquiring unit, configured to acquire, according to the acquired multiple resource identifiers, resource data on resource devices corresponding to the multiple resource identifiers; and a first sending unit, configured to encapsulate the acquired resource data into a message and send the message to the client.

An embodiment of the present invention provides a client for acquiring machine-to-machine resources, including: a second sending unit, configured to send a resource acquisition request to a server, so that the server acquires multiple resource identifiers according to the resource acquisition request; and a second receiving unit, configured to receive resource data, returned by the server, on devices corresponding to the multiple resource identifiers; where the resource data is acquired by the server, according to the multiple resource identifiers, from the resource devices corresponding to the multiple resource identifiers.

An embodiment of the present invention provides a client for acquiring machine-to-machine resources, including: a second sending unit, configured to send a resource data subscription request to a server, so that the server acquires multiple resource identifiers according to the resource data subscription request; and a second receiving unit, configured to receive resource data, returned by the server, on devices corresponding to the multiple resource identifiers; where the resource data is acquired by the server, according to the multiple resource identifiers, from the resource devices corresponding to the multiple resource identifiers.

By using the technical solutions disclosed in the embodiments of the present invention, identifiers of multiple resource devices may be simultaneously included in one resource acquisition request; resource data on the resource devices corresponding to the resource identifiers is acquired according to the identifiers of the multiple resource devices; and the acquired resource data is further encapsulated into a message and the message is sent to a requesting client. Therefore, multiple resource identifiers may be sent at a time, and the resource data returned by the resource devices corresponding to the multiple resource identifiers is sent to a requester by using one message. The resource data on the multiple resource devices may be acquired at a time, the resource data is acquired quickly, and efficiency of acquiring the resource data is high.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of an embodiment of a method for acquiring machine-to-machine resources according to the present invention;
FIG. 2 is a flowchart of an embodiment of a method for acquiring machine-to-machine resources according to the present invention;
FIG. 3 is a signaling interaction diagram of an embodiment of a method for acquiring machine-to-machine resources under a CoAP protocol according to the present invention;
FIG. 4 is a signaling interaction diagram of an embodiment of a method for acquiring machine-to-machine resources under a CoAP protocol according to the present invention;
FIG. 5 is a signaling interaction diagram of an embodiment of a method for acquiring machine-to-machine resources under a CoAP protocol according to the present invention;
FIG. 6 is a signaling interaction diagram of an embodiment of a method for acquiring machine-to-machine resources under a CoAP protocol according to the present invention;
FIG. 7 is a schematic structural diagram of a resource apparatus for acquiring machine-to-machine resources according to the present invention;
FIG. 8 is a schematic structural diagram of a resource apparatus for acquiring machine-to-machine resources according to the present invention; and
FIG. 9 is a schematic structural diagram of a client for acquiring machine-to-machine resources according to the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

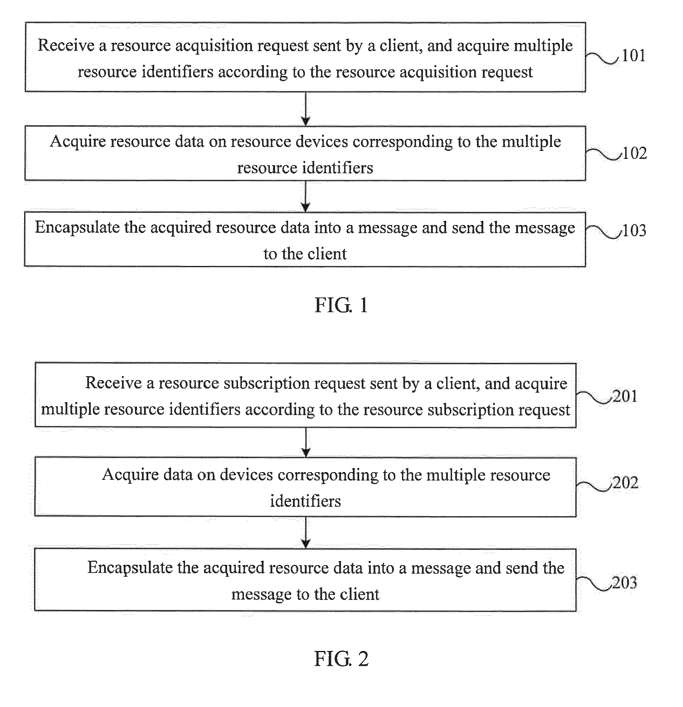

FIG. 1 is a flowchart of a method for acquiring machine-to-machine resources according to the present invention. As shown in FIG. 1, the method for acquiring machine-to-machine resources may include:
Step 101: Receive a resource acquisition request sent by a client, and acquire multiple resource identifiers according to the resource acquisition request.
Step 102: Acquire resource data on resource devices corresponding to the multiple resource identifiers.
Step 103: Encapsulate the acquired resource data into a message and send the message to the client.

Actions in this embodiment may be executed by a server, where the server may be a device connected to multiple sensors. The resource devices corresponding to the resource identifiers may be the multiple sensors connected to the server, and the resource data may be data corresponding to the sensors.

Further, the resource identifiers may be mnemonic symbols of the resource identifiers; and the acquiring, according to the resource acquisition request, resource data on resource devices corresponding to the multiple resource identifiers includes: searching for the resource identifiers corresponding to the mnemonic symbols of the resource identifiers, and acquiring resource data on the resource devices corresponding to the found resource identifiers. When the resource identifiers are identified in the form of mnemonic symbols, the length of parameters in the resource acquisition request may be reduced, which facilitates sending. The length of the mnemonic symbols is small, and the mnemonic symbols are in one-to-one correspondence with the resource identifiers.

Further, the method includes receiving the resource data reported by the resource devices corresponding to the resource identifiers; and the acquiring data on resource devices corresponding to the multiple resource identifiers includes: determining the received resource data reported by the resource devices corresponding to the resource identifiers, as the resource data on the resource devices corresponding to the resource identifiers. If a same resource device reports multiple pieces of resource data within a period of time, the finally reported resource data is used as the resource data on the resource device. The manner of acquiring the resource data is applicable to each embodiment of the present invention.

In this embodiment of the present invention, a validity period of returning the resource data may be set for the resource devices corresponding to the multiple resource identifiers; and the encapsulating the acquired resource data into a message and sending the message to the client include: encapsulating the resource data that is returned by the resource devices corresponding to the resource identifiers and received within the validity period into the message and sending the message to the client. Certainly, the validity period in this embodiment of the present invention may be a period of time, and the resource data reported within the period of time may be all used as valid resource data. Certainly, if a same resource device reports multiple pieces of resource data within the period of time, for the resource device, only the resource data finally reported by the resource device within the period of time is used as the resource data on the resource device.

Further, the resource acquisition request includes multiple resource identifiers; and the acquiring multiple resource identifiers according to the resource acquisition request includes: parsing the resource acquisition request to acquire the multiple resource identifiers.

Further, the resource acquisition request includes a group identifier of a group to which the multiple resource identifiers belong; and the acquiring multiple resource identifiers according to the resource acquisition request includes: parsing the group identifier of the group to which the multiple resource identifiers belong in the resource acquisition request, and acquiring the multiple resource identifiers corresponding to the group identifier of the group to which the resource identifiers belong; and then acquiring, according to the multiple resource identifiers acquired by parsing, the resource data on the devices corresponding to the multiple resource identifiers.

By using the technical solution disclosed in this embodiment of the present invention, identifiers of multiple resource devices may be simultaneously included in one resource acquisition request; resource data on the resource devices corresponding to the resource identifiers is acquired according to the identifiers of the multiple resource devices; and the acquired resource data is further encapsulated into a message and the message is sent to a requesting client. Therefore, multiple resource identifiers may be sent at a time, and the resource data returned by the resource devices corresponding to the multiple resource identifiers is sent to a requester by using one message. The resource data is acquired quickly, and efficiency of acquiring the resource data is high.

FIG. 2 is a flowchart of a method for acquiring machine-to-machine resources according to the present invention. As shown in FIG. 2, the method for acquiring machine-to-machine resources may include:
Step 201: Receive a resource data subscription request sent by a client, and acquire multiple resource identifiers according to the resource data subscription request.
Step 202: Acquire data on devices corresponding to the multiple resource identifiers.
Step 203: Encapsulate the acquired resource data into a message and send the message to the client.

Actions in this embodiment may be executed by a server, where the server may be a device connected to multiple sensors. The resource devices corresponding to the resource identifiers may be the multiple sensors connected to the server.

Further, the resource data subscription request includes the multiple resource identifiers; and the acquiring multiple resource identifiers according to the resource data subscription request includes: parsing the resource data subscription request to acquire the multiple resource identifiers.

Further, the resource data subscription request includes a group identifier of a group to which the multiple resource identifiers belong; and the acquiring multiple resource identifiers according to the resource data subscription request includes: parsing the group identifier of the group to which the multiple resource identifiers belong in the resource data subscription request, and acquiring the multiple resource identifiers corresponding to the group identifier of the group to which the resource identifiers belong.

Further, before receiving the resource acquisition request sent by the client, the method further includes:
receiving a resource device metadata acquisition request sent by the client; and acquiring the resource device metadata according to the resource device metadata acquisition request, and sending the resource device metadata to the client. The resource device metadata includes the group identifier of the group to which the resource identifiers belong. In this embodiment, the resource identifiers are mnemonic symbols of the resource identifiers; and the acquiring, according to the resource data subscription request, resource data corresponding to the multiple resource identifiers, includes: searching for the resource identifiers corresponding to the mnemonic symbols of the resource identifiers, and acquiring the resource data corresponding to the found resource identifiers. Generally the length of the mnemonic symbols is small. Using of the mnemonic symbols may reduce the length of the message. One request message may carry more mnemonic symbols, so that acquisition of the resource data is faster and that efficiency is higher.

In this embodiment, for the acquiring, according to the resource data subscription request, resource data corresponding to the multiple resource identifiers, refer to related descriptions in other embodiments of the present invention. Certainly, a validity period of returning the resource data may also be set for the devices corresponding to the multiple resource identifiers; and the encapsulating the acquired resource data into a message and sending the message to the client include: encapsulating the resource data that is returned by the devices corresponding to the resource identifiers and received within the validity period into the message and sending the message to the client.

In the method of this embodiment, the resource data subscription request may be used to subscribe to, from a server, the resource data on the resource devices connected to the server. Further, the subscription request may include a subscription rule, where the subscription rule may be used to instruct the server to acquire the resource data on the resource devices according to the subscription rule.

Further, the subscription rule may include: when the resource data on a resource device corresponding to the subscribed resource identifier changes, acquiring changed resource data. In this case, acquiring, according to the resource data subscription request, resource data corresponding to the multiple resource identifiers, includes: monitoring, according to the resource data subscription rule, whether the resource data on the resource device corresponding to each resource identifier changes, and when the resource data on the device corresponding to the resource identifier changes, acquiring the changed resource data.

In another manner of this embodiment, the subscription rule includes: when a difference before and after a change of resource data on a resource device corresponding to the subscribed resource identifier exceeds a set value, acquiring changed resource data. In this case, the acquiring, according to the resource data subscription request, resource data corresponding to the multiple resource identifiers, includes: monitoring, according to the resource data subscription rule, whether resource data on the device corresponding to each resource identifier changes, and when the monitored resource data on the device corresponding to the resource identifier changes and the difference of the resource data before and after the change exceeds the set value, acquiring the changed resource data from the device on which the difference of the resource data before and after the change exceeds the set value.

In another manner of this embodiment, the subscription rule includes: when a value of resource data on a resource device corresponding to the subscribed resource identifier is within a set range or beyond a set range, acquiring changed resource data of the resource device; and the acquiring resource data corresponding to the multiple resource identifiers includes: monitoring, according to the resource data subscription rule, whether the resource data on the resource device corresponding to each resource identifier changes, and when the monitored resource data on the resource device corresponding to the resource identifier changes and a value of the changed resource data is within the set range or beyond the set range, acquiring the changed resource data of the resource device.

In another manner of this embodiment, the subscription rule includes: when change time of a value of resource data on a resource device corresponding to the subscribed resource identifier is greater than a set time value, acquiring changed resource data of the resource device; and the acquiring resource data corresponding to the multiple resource identifiers includes: monitoring, according to the resource data subscription rule, whether the resource data on the resource device corresponding to each resource identifier changes, and when the monitored resource data on the resource device corresponding to the resource identifier changes and change time of the resource data is greater than the set time value, acquiring the changed resource data of the resource device.

By using the technical solution disclosed in this embodiment of the present invention, multiple resource identifiers may be simultaneously included in one resource acquisition request; resource data on multiple resource devices corresponding to the multiple resource identifiers is acquired; and the acquired resource data is further encapsulated into a message and the message is sent to a requesting client. Therefore, multiple resource identifiers may be sent at a time, and the resource data returned by the resource devices corresponding to the multiple resource identifiers is sent to a requester by using one message. The resource data may be acquired quickly, and efficiency of acquiring the resource data is high. Because there is a subscription request, the resource data may be quickly sent according to a requirement of the requesting client, and personalization may be realized.

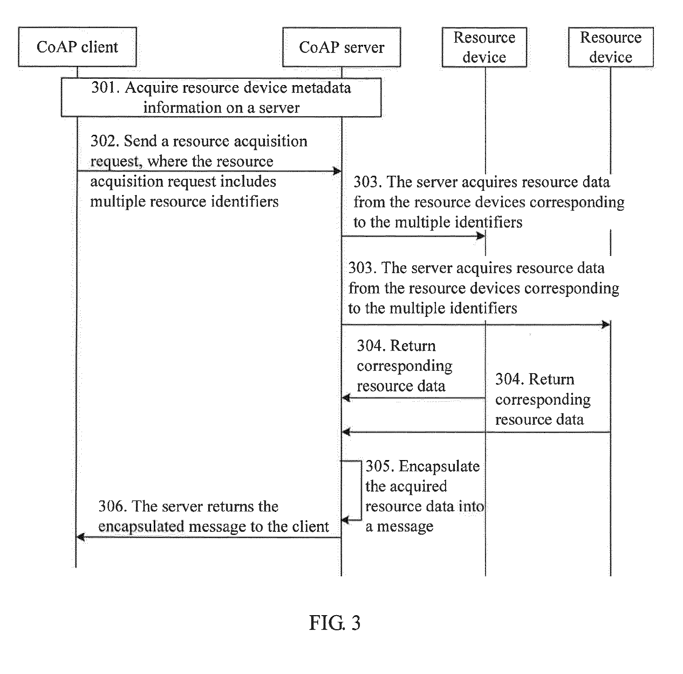

FIG. 3 is a flowchart of a method for acquiring machine-to-machine resources according to the present invention. As shown in FIG. 3, machine-to-machine resources are acquired under a CoAP protocol, and a specific implementation process may include:
Step 301: A CoAP client acquires resource device metadata on a CoAP server.

The process of acquiring metadata is described as follows: 1-2, the CoAP client sends a GET request to the CoAP server, namely, a /.well-known/core address, so as to acquire metadata; and the CoAP client receives a response and knows that there are two sensors, namely, a temperature sensor and a light sensor, where the CoAP server may be represented by /.well-known/core.

After receiving the request, the CoAP server determines, according to the request URI /.well-known/core, that the CoAP client requests a resource index or Link format metadata. In this case, the CoAP server may provide a resource index for the CoAP client to further request the Link Format metadata, or the CoAP server directly provides the Link format metadata. This example describes the latter case.

```
               REQ: GET /.well-known/core
               RES: 2.05 "Content"
               </sensors/temp>;rt="TempSensor(temperature sensor)";if="sensor",
               </sensors/light>;rt="LightSensor(light sensor)";if="sensor"
               3-4. The CoAP client sends a request to the CoAP server, namely, a
          /sensors/temp address, so as to acquire temperature sensor data.
```

The CoAP server determines, according to the request URI /sensors/temp, that the CoAP client requests resource data of the temperature sensor, and further acquires the resource and constructs and returns a response message to the CoAP client.

```
               REQ: GET /sensors/temp //requesting data of the temperature sensor
               RES: 2.05 "Content"
               {"e":[
               {"n": "temperature", "v": 27.2, "u'": "degC" },], //data of the temperature
          sensor
               "bn": "http://[2001:db8::2]/", //address of a requester
               "bt": 1320078429, //request sequence number
               "ver": 1
               }
```

Certainly, in each embodiment of the present invention, if there is no resource device metadata on the client, the client may request metadata from the server. When there is resource device metadata on the client, the client may not request metadata again. That is, the step of requesting resource device metadata by the client from the server may be unnecessary.

Step 302: The CoAP client sends a resource acquisition request to the CoAP server, where the resource acquisition request includes multiple resource identifiers.

The CoAP client acquires, according to the acquired Link Format metadata, resource identifiers URIs (Uniform Resource Identifiers, uniform resource identifiers) of multiple resource devices to be requested. A resource acquisition request message is constructed according to the URIs, where the request message may include a start URI and a combination of multiple resource identifiers, where the start URI may be a device root address /.wellknown/core or an index address (such as /sensors), or may also be set by an application according to an application situation. The message body of the resource acquisition request may be null. For example:

```
               REQ: GET /sensors?uri="/sensors/temp"&"/sensors/light" //requesting
          multiple resources, including a temperature sensor and a light sensor
```

Particularly, when the CoAP client wants to request all resources in a resource directory, * may also be used to indicate that all resources in the resource directory are requested. For example, REQ: GET /sensors?uri=* indicates all resources on the CoAP server.
Step 303: The CoAP server acquires, according to the multiple resource identifiers carried in the resource acquisition request, resource data on each resource device from the resource devices corresponding to the multiple identifiers.

After receiving the resource acquisition request sent by the CoAP client, the CoAP server further analyzes the resource identifiers URIs of the multiple resources. The CoAP server acquires the resource data according to the URIs of the multiple resources, and subsequently encapsulates the acquired multiple pieces of resource data into a message and returns the message to the CoAP client.
Step 304: Each resource device returns the resource data to the CoAP server separately.
Step 305: The CoAP server encapsulates the resource data returned by each resource device into a message, where the encapsulation means using a SenML file to describe one or more pieces of resource data and placing the file into the message body of a response message. In this embodiment of the present invention, the message returned by the server to the client may be referred to as the response message.
Step 306: The CoAP server sends the encapsulated message to the CoAP client.

The following is an example of the message returned by the CoAP server:

```
               RES: 2.05 "Content"
               {"e":[
               {"n": "temperature","uri": "/sensors/temp","v": 27.2, "u": "degC" },
                //temperature sensor resource
               "n": "light", "uri": "/sensors/light","v": 60, "u": "W" }
                //light sensor resource
               ],
               "bn": "http://[2001:db8::2]/", //address of a requester
               "bt": 1320078429, //request sequence number
               "ver":1
               }
```

Particularly, if multiple resources are not synchronous, the CoAP server may wait for resource data returned by all the multiple resources, and then encapsulate the returned resource data into the message and send the message to the CoAP client. Certainly, optionally, the CoAP server may also set, for each resource device, a validity period of returning the resource data, and encapsulate resource data returned within the validity period into the message and send the message to the CoAP client.

Correspondingly, after the CoAP client receives the message returned by the CoAP server, if the message includes the resource data of only a part of resource devices, the CoAP client may consider that the resource devices that do not return the resource data do not exist currently. Or if all data returned by the CoAP server is -1 or na, it indicates that data is not successfully acquired. The CoAP client may reattempt, after a delay/period of time, to acquire the resource data on the resource devices that do not return the resource data in this interaction, which is not limited by this solution of the present invention.

Optionally, the resource identifiers may also be mnemonic symbols of the resources. Because each resource device has its own URI, the resource acquisition request includes multiple resource identifiers URIs. The resource acquisition request message is long, and may exceed the limit of the CoAP protocol. To avoid this case, mnemonic symbols may be used to replace resource identifiers. This method may be varied in the following manner:

First, in step 301, the CoAP server adds a mnemonic symbol to each resource URI in the Link Format as follows:

```
</sensors/temp>;rt="TempSensor(temperature sensor)";if="sensor";tag=1
          //the mnemonic symbol of the temperature sensor is tag 1
               </sensors/light>;rt="LightSensor(light sensor)";if="sensor";tag=2 //the
          mnemonic symbol of the light sensor is tag 2
```

In step 302, the resource acquisition request sent by the CoAP client may include a start URI and mnemonic symbols of multiple resources, for example,

```
               REQ:GET /Sensors?tag=1&2 //requesting resource
          data of sensors whose mnemonic symbols are 1 and 2
```

In step 303, after receiving the resource acquisition request sent by the client, the CoAP server determines, according to the carried mnemonic symbols of multiple resources, that the request is a multi-resource request. The CoAP server searches, according to the mnemonic symbols, for multiple resource identifiers URIs corresponding to the mnemonic symbols. The CoAP server acquires resource data according to the found multiple resource identifiers URIs, and encapsulates acquired multiple pieces of resource data into a message and sends the message to the CoAP client. In this case, a validity period may also be set. For the specific implementation process, refer to related descriptions in other embodiments of the present invention. Details are not repeated herein.

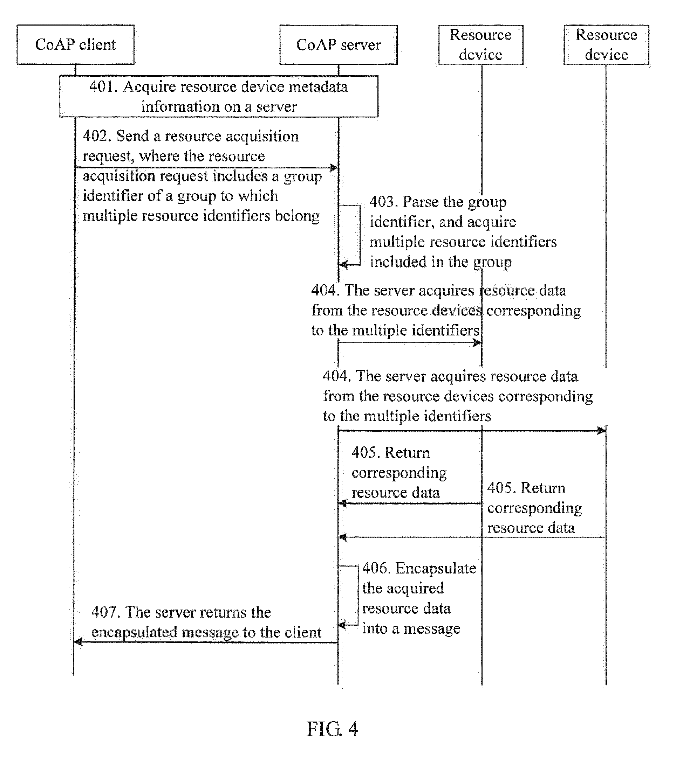

FIG. 4 is a flowchart of a method for acquiring machine-to-machine resources according to the present invention. As shown in FIG. 4, machine-to-machine resources are acquired under a CoAP protocol, and a specific implementation process may include:
Step 401: A CoAP client acquires resource device metadata on a CoAP server. For a specific implementation process of this step, refer to the related description in the embodiment shown in FIG. 3. Details are not repeated herein.

The client acquires Link Format metadata, where the metadata includes a group to which each URI belongs, where the group is used to identify a group to which multiple sensors belong. A specific method may be adding a parameter to description of each sensor for indicating the identifier of the group to which each sensor belongs, for example,

```
               </sensors/temp>;rt="TempSensor(temperature sensor)";if="sensor";group=1
          //the group to which the temperature sensor belongs is group 1
               </sensors/light>;rt="LightSensor(light sensor)";if="sensor";group=2 //the
          group to which the light sensor belongs is group 2
               </sensors/compass>;rt="CompassSensor(compass
          sensor)";if="sensor";group=1 //the group to which the compass sensor belongs is
          group 1
```

Step 402: The CoAP client sends a resource acquisition request to the CoAP server, where the resource acquisition request includes a group identifier of a group to which one or more resource identifiers belong.

The client acquires, according to the Link Format metadata, the group identifier corresponding to multiple resource identifiers URIs to be requested. According to the group identifier, the resource acquisition request is constructed, where the resource acquisition request includes a start URI and the group identifier of the group to which the multiple resource identifiers belong. The start URI may be /.wellknown/core or an index address (such as /sensors), or may also be set by an application according to an application situation. The message body of the request may be null. For example:

```
               REQ: POST /.wellknown/core
               {"group":[
               {"group":"1"}]
               }
               indicating acquisition of resource data of the temperature sensor and compass
          sensor in group 1.
```

The request may also include an operation name. For example, a Get operation is included to acquire data of a group of resources:

```
               REQ: POST /.wellknown/core
               {"operation": "Get", //indicating acquisition of a value of a resource in
          the group
               "groups":[
               {"group":"1"}]
               }
```

Or an Observe operation is included to subscribe to data of a group of resources:

```
               REQ: POST /.wellknown/core
               {"operation": "Observe", //indicating subscription to a value of a
          resource in the group
               "groups":[
               {"group":"1"}]
               }
```

Step 403: The CoAP server parses the group identifier according to the group identifier carried in the resource acquisition request, and acquires multiple resource identifiers included in the group identified by each group identifier.

After receiving the resource acquisition request sent by the CoAP client, the CoAP server parses the group identifier. Certainly, one or more group identifiers may be included in the resource acquisition request, and by parsing the group identifier, multiple resource identifiers URIs included in the group identified by each group identifier are acquired.

For the process of acquiring the resource data, refer to related descriptions in other embodiments. Details are not repeated herein.
Step 404: The CoAP server acquires the resource data on each resource device from resource devices corresponding to the multiple resource identifiers.
Step 405: Each resource device returns the resource data to the CoAP server.
Step 406: The CoAP server encapsulates the resource data returned by each resource device into a message, where the encapsulation means using a SenML file to describe one or more pieces of resource data and placing the file into the message body of a response message.
Step 407: The CoAP server sends the encapsulated message to the CoAP client.

The CoAP server acquires the resource data from the resource devices identified by the multiple resource identifiers URIs, and encapsulates the acquired resource data into a message and returns the message to the CoAP client.

The following is an example of the message sent by the CoAP server to the CoAP client:

```
               RES: 2.05 "Content"
               {"e":[
               {"n": "temperature","uri": "/sensors/temp","v": 27.2, "u": "degC" },
                //temperature sensor resource
               "n": "light", "uri": "/sensors/light","v": 60, "u": "W"}
                //light sensor resource
               ],
               "bn": "http://[2001:db8::2]/",
               "bt": 1320078429,
               "ver":1
```

Particularly, if multiple resources are not synchronous, the CoAP server may wait for the resource data returned by all the multiple resources, and then encapsulate the returned resource data into a message and send the message to the CoAP client. Certainly, optionally, the CoAP server may also set, for each resource device, a validity period of returning the resource data, and encapsulate the resource data returned within the validity period into a message and send the message to the CoAP client.

Correspondingly, after the CoAP client receives the message returned by the CoAP server, if the message includes the resource data of only a part of resource devices, the CoAP client may consider that the resource devices that do not return the resource data do not exist currently. Or if all data returned by the CoAP server is -1 or na, it indicates that data is not successfully acquired. The CoAP client may reattempt, after a delay, to acquire the resource data on the resource devices that do not return the resource data in this interaction, which is not limited by this patent.

Certainly, the CoAP server in this embodiment may also set, for the resource devices, the validity period of returning resource data. For specific implementation of the validity period, refer to related descriptions in other parts of the present invention. Details are not repeated herein.

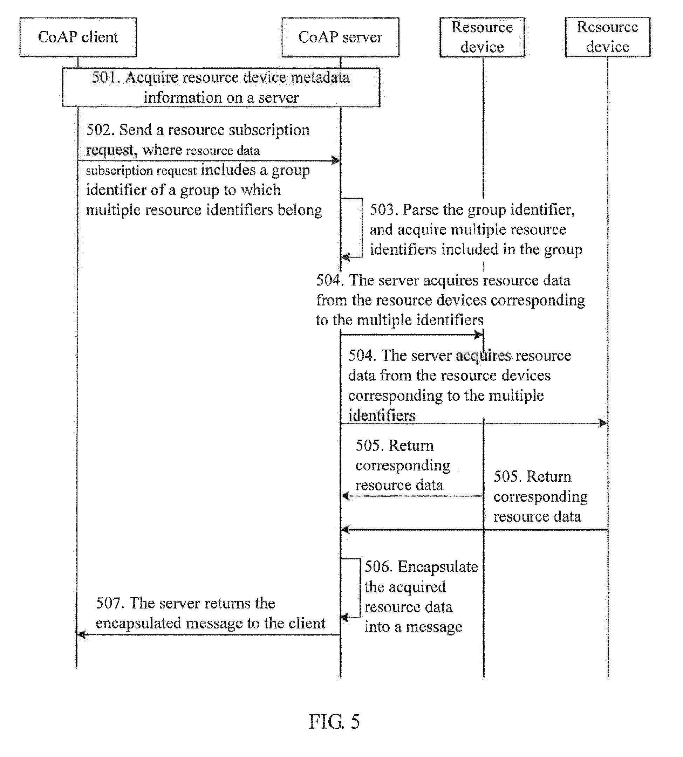

FIG. 5 is a flowchart of a method for acquiring machine-to-machine resources according to the present invention. As shown in FIG. 5, machine-to-machine resources are acquired under a CoAP protocol, and a specific implementation process may include:
Step 501: A CoAP client acquires resource device metadata on a CoAP server. For a specific implementation process of this step, refer to the related description in the embodiment shown in FIG. 4. Details are not repeated herein.

The client acquires Link Format metadata, where the metadata includes a group group to which each URI belongs, where the group is used to identify a group to which multiple sensors belong. A specific method may be adding a parameter to description of each sensor for identifying the id of the group group to which each sensor belongs, for example,

```
</sensors/temp>;rt="TempSensor(temperature sensor)"; if="sensor";group=1
          // the group to which the temperature sensor belongs is group 1
               </sensors/light>;rt="LightSensor(light sensor)";if="sensor";group=2 // the
          group to which the light sensor belongs is group 2
               </sensors/compass>;rt="CompassSensor(compass
          sensor)";if="sensor";group=1 //the group to which the compass sensor belongs is
          group 1
```

Step 502: The CoAP client sends a resource data subscription request to the CoAP server, where the resource data subscription request includes a group identifier of a group to which multiple resource identifiers belong.

The CoAP client acquires, according to the Link Format metadata, the group identifier of the group to which the multiple resource identifiers URIs to be requested belong. According to the group identifier, the resource data subscription request is constructed, where the resource data subscription request includes a start URI and the group identifier of the group to which the multiple resource identifiers belong. The start URI may be /.wellknown/core or an index address (such as /sensors), or may also be set by an application according to an application situation. The message body of the request includes the group identifier of the requested resource group, for example,

```
               REQ: POST /.wellknown/core //start URI used for requesting a resource
          group
               {"groups":[
               {"group":"1"}] //requested resource group identifier
               }
```

Step 503: The CoAP server parses the group identifier according to the group identifier carried in the resource data subscription request, and acquires multiple resource identifiers included in the group identified by each group identifier.

After receiving the resource data subscription request sent by the CoAP client, the CoAP server parses the group identifier. Certainly, one or more group identifiers may be included in the resource data subscription request, and by parsing the group identifier, multiple resource identifiers URIs included in the group identified by each group identifier are acquired.

For the process of acquiring the resource data, refer to related descriptions in other embodiments. Details are not repeated herein.
Step 504: The CoAP server acquires the resource data on each resource device from resource devices corresponding to the multiple resource identifiers.
Step 505: Each resource device returns the resource data to the CoAP server.
Step 506: The CoAP server encapsulates the resource data returned by each resource device into a message, where the encapsulation means using a SenML file to describe one or more pieces of resource data and placing the file into the message body of a response message.
Step 507: The CoAP server sends the encapsulated message to the CoAP client.

The CoAP server acquires the resource data from the resource devices identified by the multiple resource identifiers URIs, and encapsulates the acquired resource data into a message and returns the message to the CoAP client.

The following is an example of the message sent by the CoAP server to the CoAP client:

```
               RES: 2.05 "Content"
               {"e":[
               {"n":"temperature","uri": "/sensors/temp","v": 27.2, "u": "degC"},
                //resource data of a temperature sensor
               "n": "light", "uri": "/sensors/light","v": 60, "u": "W" }
                //resource data of a light sensor
               ],
               "bn": "http://[2001:db8::2]/",
               "bt": 1320078429,
               "ver": 1
```

Particularly, if the resource data returned by multiple resource devices is not synchronous, the CoAP server may wait for all the multiple resource devices to return the resource data, and then encapsulate the returned resource data into a message and send the message to the CoAP client. Certainly, optionally, the CoAP server may also set, for each resource device, a validity period of returning the resource data, and encapsulate the resource data returned within the validity period into a message and send the message to the CoAP client.

Correspondingly, after the CoAP client receives the message returned by the CoAP server, if the message includes the resource data of only a part of resource devices, the CoAP client may consider that the resource devices that do not return the resource data do not exist currently. Or if all data returned by the CoAP server is -1 or na, it indicates that data is not successfully acquired. The CoAP client may reattempt, after a delay, to acquire the resource data on the resource devices that do not return the resource data in this interaction, which is not limited by this patent.

Certainly, the CoAP server in this embodiment may also set, for the resource devices, the validity period of returning resource data. For specific implementation of the validity period, refer to related descriptions in other parts of the present invention. Details are not repeated herein.

Optionally, the resource data subscription request in this embodiment may include a subscription rule, where the subscription rule instructs the CoAP server to acquire the resource data on the resource devices according to the subscription rule.

Further, the subscription rule may include: when the resource data corresponding to the subscribed resource identifier changes, acquiring changed resource data; or the subscription rule includes: when a difference before and after a change of resource data on a device corresponding to the subscribed resource identifier exceeds a set value, acquiring the changed resource data. For the related implementation of the subscription rule, refer to related descriptions in other embodiments of the present invention. Details are not repeated herein.

After receiving the subscription rule sent by the CoAP client, the CoAP server may store the subscription rule. Subsequently, the CoAP server monitors the resource data on each resource device according to the subscription rule. When the resource data on a resource device satisfies the subscription rule, the CoAP server acquires the resource data on the resource device that satisfies the subscription rule.

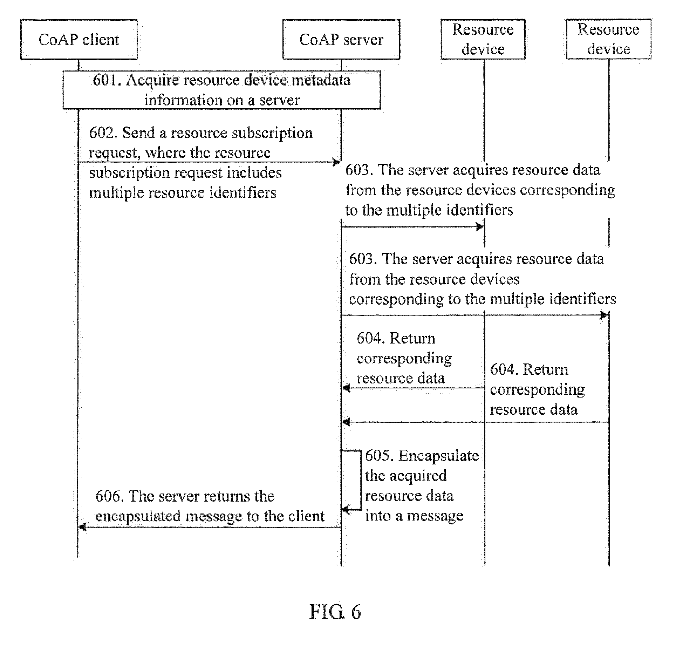

FIG. 6 is a flowchart of a method for acquiring machine-to-machine resources according to the present invention. As shown in FIG. 6, machine-to-machine resources are acquired under a CoAP protocol, and a specific implementation process may include:
Step 601: A CoAP client acquires resource device metadata on a CoAP server. For a specific implementation process of this step, refer to the related description in the embodiment shown in FIG. 5. Details are not repeated herein.
Step 602: The CoAP client sends a resource data subscription request to the CoAP server, where the resource data subscription request includes multiple resource identifiers.

The CoAP client acquires, according to the Link Format metadata, the multiple resource identifiers URIs to be requested. According to the resource identifiers, the resource data subscription request is constructed, where the resource data subscription request includes a start URI and multiple resource identifiers. The start URI may be a root directory/.wellknown/core or an index address (such as /sensors), or may also be set by an application according to an application situation. The message body of the request includes identifiers of the requested multiple resources. For example:

```
               REQ: POST /.wellknown/core
               {"operation":"Observe", //indicating subscription to a value of a
          resource in the group
               "uris":[
               {"uri": "/sensors/temp"}, //resource identifier in the form of a URI
               {"uri": "/sensors/light"}],
               }
```

Similarly, another method for constructing a request message is: the request method is POST, and the request URI of the message is a root address URI of a device, namely, /.wellknown/core, or is an index address (such as /sensors), or may also be set by an application according to an application situation. The message body of the request includes identifiers of one or more resources. For example:

```
               REQ: POST /.wellknown/core
               {"uris":[
               { "uri": "/sensors/temp"}, //resource identifier in the form of a URI
               {"uri": "/sensors/light"}],
               }
```

The request may also include an operation name. For example, a Get operation is included to acquire data of one or more resource devices:

```
               REQ: POST /.wellknown/core
               {"operation":"Get", //indicating acquisition of resource data on the
          resource devices in the group
               "uris":[
               {"uri": "/sensors/temp"}, //resource identifier in the form of a URI
               {"uri": "/sensors/light"}],
               }
```

Or an Observe operation is included to subscribe to resource data on one or more resource devices: REQ: POST /.wellknown/core {"operation": "Observe", //indicating subscription to resource data on the resource devices in the group "uric":[ { "uri": "/sensors/temp"}, //resource identifier in the form of a URI { "uri": "/sensors/light"}], }

Or the requested resource identifiers are a series of short path names:

```
               REQ: POST /.wellknown/core
               {"operation": "Get", //indicating acquisition of resource data on the
          resource devices in the group
               "tags":[
               { "tag": "tag1"}, //mnemonic symbol of a resource identifier of a
          short path name
               { "tag": "tag2"}]
               }
```

Step 603: The CoAP server acquires, according to the resource identifiers carried in resource data subscription request, resource data from the resource devices corresponding to the resource identifiers.

For the process of acquiring the resource data, refer to related descriptions in other embodiments. Details are not repeated herein.
Step 604: Each resource device returns the resource data to the CoAP server.
Step 605: The CoAP server encapsulates the resource data returned by each resource device into a message, where the encapsulation means using a SenML file to describe one or more pieces of resource data and placing the file into the message body of a response message.
Step 606: The CoAP server sends the encapsulated message to the CoAP client.

The CoAP server acquires the resource data from the resource devices identified by the multiple resource identifiers URIs, and encapsulates the acquired resource data into a message and returns the message to the CoAP client.

For the specific implementation process of this embodiment, refer to descriptions in other related embodiments. Details are not repeated herein.

Particularly, if the resource data returned by multiple resource devices is not synchronous, the CoAP server may wait for all the multiple resource devices to return the resource data, and then encapsulate the returned resource data into a message and send the message to the CoAP client. Certainly, optionally, the CoAP server may also set, for each resource device, a validity period of returning the resource data, and encapsulate resource data returned within the validity period into a message and send the message to the CoAP client.

Correspondingly, after the CoAP client receives the message returned by the CoAP server, if the message includes the resource data of only a part of resource devices, the CoAP client may consider that the resource devices that do not return the resource data do not exist currently. The CoAP client may reattempt, after a delay, to acquire the resource data on the resource devices that do not return the resource data in this interaction, which is not limited by this patent.

Certainly, the CoAP server in this embodiment may also set, for the resource devices, the validity period of returning resource data. For specific implementation of the validity period, refer to related descriptions in other parts of the present invention. Details are not repeated herein.

Certainly, the resource data subscription request in this embodiment may also include a subscription rule. For the related description of the subscription rule, refer to related descriptions in other embodiments of the present invention. Details are not repeated herein.

Optionally, in a case in which the resource acquisition request or resource data subscription request in the present invention includes a group identifier of a group to which multiple resource identifiers belong, the group to which the multiple resource identifiers belong may be identified in the Link Format metadata, or may also be identified by adding a new group row to the link format file, for example:

```
               </sensors/temp>;rt="TempSensor(temperature sensor)";if="sensor";
               </sensors/light>;rt="LightSensor(light sensor)";if="sensor";
               </sensors/compass>;rt="CompassSensor(compass sensor)";if="sensor";
               </sensors/group1>; rt="sensorGroup ;sensors= "/sensors/temp"&&
          "sensors/compass" //definition of a resource group, herein indicating resource
          group 1
                //including a temperature sensor and a compass sensor
               or
               </sensors/temp>;rt="TempSensor(temperature sensor)";if="sensor";tag=1;
                //temperature sensor resource and mnemonic symbol thereof
               </sensors/light>;rt="LightSensor(light sensor)";if="sensor";tag=2;
                //light sensor resource and mnemonic symbol thereof
               </sensors/compass>;rt="CompassSensor(compass
          sensor)";if="sensor";tag=3;
                //compass sensor resource and mnemonic symbol thereof
               </sensors/group1>; rt="sensorGroup ;inc="1,3";
                //definition of a resource group, including resources 1 and 3,
                namely, a temperature sensor resource and a compass sensor resource
```

In this case, the method for constructing the resource acquisition request or resource data subscription request according to the group identifier may be as follows, for example,

```
               REQ:GET /sensors/group1 implementation of a resource acquisition request
               REQ:POST /sensors/group1 implementation of a resource data subscription
          request
```

All of the foregoing embodiments use the CoAP protocol as an interaction protocol for resource acquisition. Actually, the present invention is not limited to the CoAP protocol, and may also use other RESTful (Representational State Transfer, Representational State Transfer) protocols, for example, HTTP (Hypertext Transfer Protocol).

When the HTTP is used as the interaction protocol, the resource server is an HTTP server, and the client is an HTTP client. When the HTTP protocol is used to implement acquisition of machine-to-machine resources, the only difference from the implementation solution using the CoAP protocol lies in message format. For a specific implementation process of each step, refer to related descriptions in each embodiment described in FIG. 5 to FIG. 8. The following describes each resource acquisition request and resource data subscription request under the HTTP protocol in different situations, specifically:
1. When the client sends a resource acquisition message to the server, in a case in which the resource acquisition message includes multiple resource identifiers, the resource acquisition message may be expressed as follows:

   ```
HTTP request
               POST host:port/.wellknown/core /HTTP 1.1 //start URI used for
          requesting a resource group
               HTTP Body: <RequestMsgBody>
               {"operation": "Get",
               "uris":[
               {"uri": "/sensors/temp"}, //resource identifier in the form of a URI
               { "uri": "/sensors/light"}],
               }
```

   An example of a message sent by the HTTP server to the HTTP client is as follows:

   ```
HTTP response:
               200 OK
               HTTP Body:
               {"e":[
               {"n": "temperature","uri": "/sensors/temp","v": 27.2, "u": "degC" },
                //temperature sensor resource
               "n": "light", "uri": "/sensors/light","v": 60, "u": "W" }
                //light sensor resource
               ],
               "bn": "http://[2001:db8::2]/",
               "bt": 1320078429,
               "ver": 1
               }
```
2. When the client sends a resource acquisition message to the server, in a case in which the resource acquisition message includes a group identifier of a group to which multiple resource identifiers belong, the resource acquisition message may be expressed as follows:

   ```
               HTTP request
               POST host:port/.wellknown/core /HTTP 1.1 //start URI used for
          requesting a resource group
               HTTP Body: <RequestMsgBody>
               {"operation": "Get",
               "groups":[
               { "group": "1"}] //requested resource group identifier
               }
```

   An example of a message sent by the HTTP server to the HTTP client is as follows:

   ```
               HTTP response:
               200 OK
               HTTP Body:
               {"e":[
               {"n": "temperature","uri": "/sensors/temp","v": 27.2, "u": "degC" },
                //temperature sensor resource
               "n": "light", "uri": "/sensors/light","v": 60, "u": "W"}
                //light sensor resource
               ],
               "bn": "http://[2001:db8::2]/",
               "bt": 1320078429,
               "ver": 1
               }
```
3. When the client sends a resource subscription message to the server, in a case in which the resource subscription message includes multiple resource identifiers, the resource subscription message may be expressed as follows:

   ```
               HTTP request
               POST host:port/.wellknown/core /HTTP1.1 //start URI used for
          requesting a resource group
               HTTP Body: <RequestMsgBody>
               {"operation":"Observe",
               "uris":[
               {"uri": "/sensors/temp"}, //resource identifier in the form of a URI
               {"uri": "/sensors/light"}],
               }
```

   An example of a message sent by the HTTP server to the HTTP client is as follows:

   ```
               HTTP response:
               200 OK
               HTTP Body:
               {"e":[
               {"n": "temperature","uri": "/sensors/temp","v": 27.2, "u": "degC"},
                //temperature sensor resource
               "n": "light", "uri": "/sensors/light","v": 60, "u": "W" }
                //light sensor resource
               ],
               "bn": "http://[2001:db8::2]/",
               "bt": 1320078429,
               "ver": 1
               }
```
4. When the client sends a resource subscription message to the server, in a case in which the resource acquisition message includes a group identifier of a group to which multiple resource identifiers belong, the resource subscription message may be expressed as follows:

   ```
               HTTP request
               POST host:port/.wellknown/core /HTTP 1.1 //start URI used for
          requesting a resource group
               HTTP Body: <RequestMsgBody>
               {"operation": "Observe",
               "groups":[
               { "group": "1"}] //requested resource group identifier
               }
```

   An example of a message sent by the HTTP server to the HTTP client is as follows:

   ```
               HTTP response:
               200 OK
               HTTP Body:
               {"e":[
               {"n": "temperature","uri": "/sensors/temp","v": 27.2, "u": "degC"},
                //temperature sensor resource
               "n": "light", "uri": "/sensors/light","v": 60, "u": "W" }
                //light sensor resource
               ],
               "bn": "http://[2001:db8::2]/",
               "bt": 1320078429,
               "ver": 1
               }
```

Certainly, the server in the present invention may be a CoAP server or may also be an HTTP server, and the corresponding client may be a CoAP client or may also be an HTTP client.

The following describes specific content of a subscription rule in the present invention by using a subscription rule in a subscription request as an example. The details are given below.

The client may send a GET request to the server, where the request carries a subscription identifier option parameter - observe, and may further include a subscription rule. That is, the server needs to return a response to the client only when subscribed resource data on the server satisfies the subscription rule, where the response includes resource data on resource devices connected to the server. In this example, assuming that the subscription rule specifies that a minimum change range is 1, where the minimum change range may be named a "step" option and is set to 1, the message may be:

```
               REQ: GET coap://sensor.example/temperature
                         Token: 0x4a
                          Observe: 0 //subscription request
                          step: 1 //the request condition is: the minimum change is 1
```

In this case, after receiving the GET request carrying the subscription, the server returns a first ACK response, where the response carries current data of a resource requested to be subscribed to, which is "21" in this example.

The resource data on the resource devices on the server changes, and its value is "21.5". Because the change of the value is "21.5 - 21 = 0.5" compared with the earlier data and does not reach the change "1" specified by the "step" option, the server does not need to return a response to the client.

When the resource data on the server changes again, and its value is "22", because the change of the value is "22 - 21 = 1" compared with the earlier value and reaches the change "1" specified by the "step" option, the server needs to return a response to the client, and the response carries the latest resource data "22".

The resource data subscription request in this embodiment may include a subscription rule, where the subscription rule instructs the server to acquire resource data on the resource devices according to the subscription rule.

Further, the subscription rule may include one or any combination of the following conditions:
(1) When the resource data corresponding to the subscribed resource identifier changes, acquiring changed resource data; or when a difference before and after a change of resource data on a device corresponding to the subscribed resource identifier exceeds a set value, acquiring the changed resource data.
(2) When a value of the resource data on a resource device corresponding to the subscribed resource identifier is within or beyond a set range, acquiring real-time resource data of the resource device.

For example, one subscription rule may be: when the set range of the temperature is -5 to 40 degrees Celsius, acquiring a real-time temperature value on the resource device; another subscription rule may be: when the temperature exceeds 99 degrees Celsius (water is boiling), acquiring a real-time temperature value on the resource device. (3) When change time of a value of the resource data on a resource device corresponding to the subscribed resource identifier is greater than a set time value, acquiring real-time resource data of the resource device.

For example, a subscription rule may be: when the interval from the time when the temperature changes to the time when the resource data was previously acquired is greater than the set time, that is, 2 seconds, acquiring the real-time temperature value on the resource device.

After receiving the subscription rule sent by the client, the server may store the subscription rule. Subsequently the server monitors the resource data on each resource device according to the subscription rule, for example, monitors whether the change of the resource data reaches the value required by the subscription rule, and when the resource data on the resource device satisfies the subscription rule, the server acquires the resource data on the resource device that satisfies the subscription rule, and returns a response carrying the latest resource data to the client.

In this embodiment of the present invention, the monitoring, by the server, the resource data on the resource device according to the subscription rule may be specifically as follows: Each resource device reports its resource data to the server; the server judges whether the resource data on each resource device satisfies the subscription rule; and when the resource data satisfies the subscription rule, the server sends, according to the resource data subscription request, the resource data on the resource device that satisfies the subscription rule to the client.

Further, in the CoAP protocol, a universal "policy" option may be extended as a subscription rule, where the data type of the "policy" option may be JSON, or may also be other data encapsulation formatdata encapsulation formats. When the data type is the JSON type, specific subscription rules may all be placed in the "policy" option, for example,

```
                 {
                   "step":"1","range":"
               (>18)&&(<22)"//the minimum change is 1, and the change range is 18-22.
```

Where, "step" indicates the minimum change value of data, and "range" indicates the change range of the data.

Similarly, if the HTTP protocol is used, a universal "Policy" header field may be extended as a subscription rule. The specific data encapsulation format is not limited. Refer to the JSON format.

In the present invention, different parameters may be extended for different subscription conditions and are applied in the subscription rule.

Optionally, to make it easier for the client/user to construct various subscription conditions, in the present invention, the link-format may carry data parameters of resources. The following example of the link-format includes a value unit, value range, and value precision of the resource data, the minimum time interval of response messages, and so on. A WADL format is used as an example:

```
               </sensors/temp>;rt="AirTemperature";if=
               "ha1.wadl#sensor.temperature.unit=C; //value unit
               ha1.wadl#sensor.temperature.range=-30 to 50; //the maximum change
          range of the resource data that can be subscribed to is 30-50
               ha1.wadl#sensor.temperature.precision=0.1; //the change precision is 0.1
               ha1.wadl#sensor.temperature.response-rate=1s", //the minimum interval of
          subscription responses
```

The following describes two embodiments of a method for acquiring machine-to-machine resources in which actions are initiated by a client. In the two embodiments, the actions may be executed by a client to acquire, from a server, resource data of resource devices on the server. The server may be a device connected to multiple sensors. The resource devices corresponding to the resource identifiers may be multiple sensors connected to the server, and the resource data may be data corresponding to the sensors.

Embodiment 1: The method for acquiring machine-to-machine resources may include:
sending a resource acquisition request to a server, so that the server acquires multiple resource identifiers according to the resource acquisition request; and receiving resource data, returned by the server, on devices corresponding to the multiple resource identifiers; where the resource data is acquired by the server, according to the multiple resource identifiers, from the resource devices corresponding to the multiple resource identifiers.

Further, the resource acquisition request includes the multiple resource identifiers; and the acquiring multiple resource identifiers according to the resource acquisition request includes: parsing the resource acquisition request to acquire the multiple resource identifiers.

Further, the resource acquisition request includes a group identifier of a group to which the multiple resource identifiers belong; and the acquiring multiple resource identifiers according to the resource acquisition request includes: parsing, by the server, the group identifier of the group to which the multiple resource identifiers belong, and acquiring the multiple resource identifiers corresponding to the group identifier of the group to which the resource identifiers belong.

Embodiment 2: The method for acquiring machine-to-machine resources may include:
sending a resource data subscription request to a server, so that the server acquires multiple resource identifiers according to the resource data subscription request; and receiving resource data, returned by the server, on devices corresponding to the multiple resource identifiers; where the resource data is acquired by the server, according to the acquired multiple resource identifiers, from the resource devices corresponding to the multiple resource identifiers.

Further, the resource data subscription request includes the multiple resource identifiers; and the acquiring multiple resource identifiers according to the resource data subscription request includes: parsing the resource data subscription request to acquire the multiple resource identifiers.

Further, the resource data subscription request includes a group identifier of a group to which the multiple resource identifiers belong; and the acquiring multiple resource identifiers according to the resource acquisition request includes: parsing, by the server, the group identifier of the group to which the multiple resource identifiers belong, and acquiring the multiple resource identifiers corresponding to the group identifier of the group to which the resource identifiers belong.

The technical solutions described in the two embodiments may further include a validity period, a subscription rule, and so on. For a specific implementation method of the validity period and the subscription rule, refer to related descriptions in other embodiments of the present invention. Details are not repeated herein. In addition, the resource data acquisition manner in the foregoing four embodiments may also be similar to the resource data acquisition manner described in other embodiments of the present invention. Details are not repeated herein.

The method in this embodiment of the present invention may further include: before the client sends the resource acquisition request, sending, by the client, a resource device metadata acquisition request to the server; and acquiring the resource device metadata according to the resource device metadata acquisition request, where the resource device metadata includes a group identifier of a group to which the resource identifiers belong.

The following describes two embodiments of a machine-to-machine resource apparatus. The machine-to-machine resource apparatus may be the server described in the method embodiments of the present invention, and the server may be a device connected to multiple sensors, where the resource devices corresponding to the resource identifiers may be the multiple sensors connected to the server, and the resource data may be data corresponding to the sensors.

### Embodiment 1 of a machine-to-machine resource apparatus

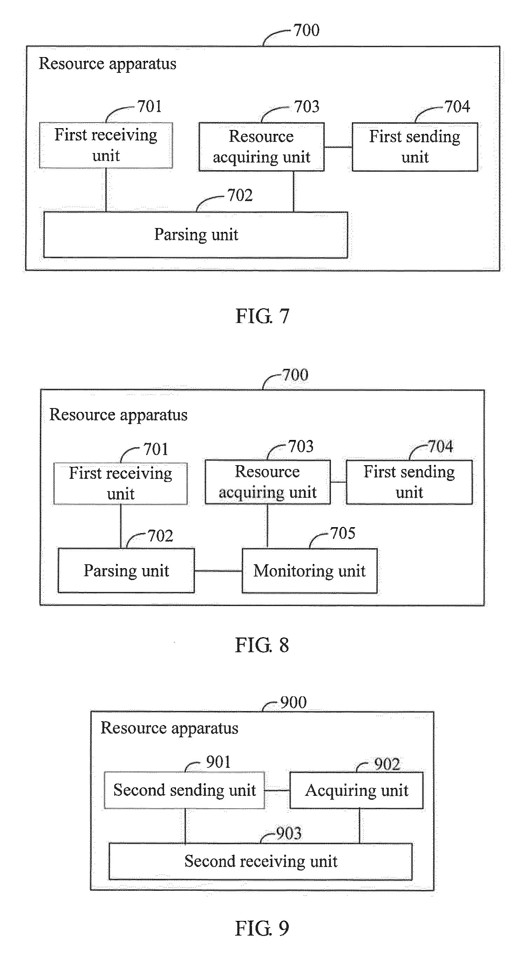

As shown in FIG. 7, a resource apparatus 700 includes: a first receiving unit 701, a resource acquiring unit 703, and a first sending unit 704, where: the first receiving unit 701 is configured to receive a resource acquisition request sent by a client, and acquire multiple resource identifiers according to the resource acquisition request; the resource acquiring unit 703 is configured to acquire resource data on resource devices corresponding to the multiple resource identifiers; and the first sending unit 704 is configured to encapsulate the acquired resource data into a message and send the message to the client.

The apparatus may further include a parsing unit 702. When the resource acquisition request received by the first receiving unit 701 includes mnemonic symbols of the resource identifiers, the parsing unit 702 is configured to search, according to the mnemonic symbols of the resource identifiers, for the resource identifiers corresponding to the mnemonic symbols of the resource identifiers; and the resource acquiring unit 703 is further configured to acquire, according to the resource identifiers found by the parsing unit 702, the resource data on resource devices corresponding to the found resource identifiers. When the resource acquisition request received by the first receiving unit 701 includes multiple resource identifiers, the parsing unit 702 is configured to parse the resource acquisition request to acquire the multiple resource identifiers. When the resource acquisition request received by the first receiving unit 701 includes a group identifier of a group to which the multiple resource identifiers belong, the parsing unit 702 is configured to parse the group identifier of the group to which the multiple resource identifiers belong in the resource acquisition request, acquire the multiple resource identifiers corresponding to the group identifier of the group to which the resource identifiers belong, and send the acquired multiple resource identifiers to the resource acquiring unit 703.

For the process of acquiring the resource data on the resource devices corresponding to the multiple resource identifiers by the resource acquiring unit 703, refer to related descriptions in other embodiments of the present invention.

The resource acquiring unit 703 further sets, for the resource devices corresponding to the multiple resource identifiers, a validity period of returning the resource data, and sends the validity period to the resource devices corresponding to the multiple resource identifiers; and the first sending unit 704 further encapsulates the resource data that is returned by the resource devices corresponding to the resource identifiers and received within the validity period into a message and sends the message to the client.

Further, the resource apparatus further includes a parsing unit. The resource acquisition request received by the first receiving unit includes a group identifier of a group to which the multiple resource identifiers belong; and the parsing unit is configured to parse the group identifier of the group to which the multiple resource identifiers belong in the resource acquisition request, acquire the multiple resource identifiers corresponding to the group identifier of the group to which the resource identifiers belong, and send the acquired multiple resource identifiers to the resource acquiring unit.

Embodiment 2 of a machine-to-machine resource apparatus

As shown in FIG. 8, a resource apparatus 700 includes: a first receiving unit 701, a parsing unit 702, a resource acquiring unit 703, and a first sending unit 704, where: the first receiving unit 701 is configured to receive a resource data subscription request sent by a client, and acquire multiple resource identifiers according to the resource data subscription request; the resource acquiring unit 703 is configured to acquire, according to the acquired multiple resource identifiers, resource data on resource devices corresponding to the multiple resource identifiers; and the first sending unit 704 is configured to encapsulate the acquired resource data into a message and send the message to the client.

When the resource data subscription request received by the first receiving unit 701 includes the multiple resource identifiers, the parsing unit 702 is configured to parse the resource data subscription request to acquire the multiple resource identifiers. When the resource data subscription request received by the first receiving unit 701 includes a group identifier of a group to which the multiple resource identifiers belong, the parsing unit 702 is configured to parse the group identifier of the group to which the multiple resource identifiers belong in the resource data subscription request, and acquire the multiple resource identifiers corresponding to the group identifier of the group to which the resource identifiers belong. When the resource data subscription request received by the first receiving unit 701 includes mnemonic symbols of the resource identifiers, the parsing unit 702 is configured to search, according to the mnemonic symbols of the resource identifiers, for the resource identifiers corresponding to the mnemonic symbols of the resource identifiers.

The resource data subscription request includes a subscription rule. The resource apparatus 700 further includes a monitoring unit 705, configured to monitor whether the resource data on the resource devices corresponding to the multiple resource identifiers satisfies the subscription rule, and when the subscription rule is satisfied, instruct the resource acquiring unit 703 to acquire resource data from a resource device whose resource data satisfies the subscription rule.

When the subscription rule includes: when the resource data of a resource device corresponding to the subscribed resource identifier changes, acquiring changed resource data; the monitoring unit 705 is further configured to monitor, according to the resource data subscription rule, whether the resource data on the resource device corresponding to each resource identifier changes, and when the resource data on the resource device corresponding to the resource identifier changes, instruct the resource acquiring unit 703 to acquire the resource data from the resource device whose resource data is changed.

When the subscription rule includes: when a difference before and after a change of the resource data on the resource device corresponding to the subscribed resource identifier exceeds a set value, acquiring the changed resource data; the monitoring unit 705 is further configured to monitor, according to the resource data subscription rule, whether the resource data on the resource device corresponding to each resource identifier changes, and when the monitored resource data on the resource device corresponding to the resource identifier changes and the difference of the resource data before and after the change exceeds the set value, instruct the resource acquiring unit 703 to acquire the resource data from the resource device on which the difference of the resource data before and after the change exceeds the set value.

For the resource apparatus in this embodiment of the present invention, before receiving the resource subscription request sent by the client, the apparatus further includes: the first receiving unit 701 further receives a resource device metadata acquisition request sent by the client; and the acquiring unit 703 acquires the resource device metadata according to the resource device metadata acquisition request, and sends the resource device metadata to the client, where the resource device metadata includes the group identifier of the group to which the resource identifiers belong.

The following describes two embodiments of a client for acquiring machine-to-machine resources. The client is used to acquire machine-to-machine resources from a server, and the server may be a device connected to multiple sensors, where the resource devices corresponding to the resource identifiers may be the multiple sensors connected to the server, and the resource data may be data corresponding to the sensors.

### Embodiment 1 of a client for acquiring machine-to-machine resources.

As shown in FIG. 9, a client 900 for acquiring machine-to-machine resources includes: a second sending unit 901 and a second receiving unit 903, where: the second sending unit 901 is configured to send a resource acquisition request to a server, so that the server acquires multiple resource identifiers according to the resource acquisition request; and the second receiving unit 903 is configured to receive resource data, returned by the server, on devices corresponding to the multiple resource identifiers; where the resource data is acquired by the server, according to the multiple resource identifiers, from the resource devices corresponding to the multiple resource identifiers.

Further, the resource acquisition request sent by the second sending unit 901 to the server includes a group identifier of a group to which the multiple resource identifiers belong; and the acquiring multiple resource identifiers according to the resource acquisition request includes: parsing, by the server, the group identifier of the group to which the multiple resource identifiers belong, and acquiring the multiple resource identifiers corresponding to the group identifier of the group to which the resource identifiers belong.

### Embodiment 2 of a client for acquiring machine-to-machine resources

A client 900 for acquiring machine-to-machine resources includes: a second sending unit 901 and a second receiving unit 902, where: the second sending unit 901 is configured to send a resource data subscription request to a server, so that the server acquires multiple resource identifiers according to the resource data subscription request; and the second receiving unit 902 is configured to receive resource data, returned by the server, on devices corresponding to the multiple resource identifiers; where the resource data is acquired by the server, according to the multiple resource identifiers, from the resource devices corresponding to the multiple resource identifiers.

Further, the resource subscription request sent by the second sending unit 901 to the server includes a group identifier of a group to which the multiple resource identifiers belong; and the acquiring multiple resource identifiers according to the resource subscription request includes: parsing, by the server, the group identifier of the group to which the multiple resource identifiers belong, and acquiring the multiple resource identifiers corresponding to the group identifier of the group to which the resource identifiers belong.

Certainly, the server may store a correspondence between mnemonic symbols and resource identifiers, and a correspondence between a group identifier of a group to which multiple resource identifiers belong and resource identifiers, and may further store resource subscription rules and so on. The storage functions may be implemented by the resource acquiring unit 703.

The technical solution described in the foregoing resource apparatus embodiment and client embodiment may further include a validity period, a subscription rule, and so on. For a specific implementation method of the validity period and the subscription rule, refer to related descriptions in other embodiments of the present invention. Details are not repeated herein. In addition, the resource data acquisition manner in the foregoing embodiments may also be similar to the resource data acquisition manner described in other embodiments of the present invention. Details are not repeated herein.

A specific application scenario of the present invention may be exemplified as follows:
1. Medical application: A medical device can detect multiple entries of data of a patient: body temperature, blood pressure, heartbeat, and so on. The data of the patient should be defined as a meaningful group. In this case, the server in the present invention may be a medical device, and the body temperature, blood pressure, heartbeat, and so on may be resource data on multiple sensors connected to the medical device.
2. Monitoring application: A monitoring device has multiple infrared detectors, cameras, and flashlights, respectively pointing to different room doors and windows. In this case, the server in the present invention may be the monitoring device, and the infrared detectors, cameras, and flashlights may be multiple sensors connected to the monitoring device. After an alarm about data on a resource device is generated, other resource devices take corresponding actions, for example, when an infrared detector detects a problem, a flashlight flashes, and a camera in the same group completes photographing.
3. Robot application: The left hand and right leg of a robot are a group group, and the right hand and left leg are another group group, where the two groups are used to control walking of the robot. In this case, the server in the present invention may be the robot, and the left hand and right leg, and right hand and left leg may be resource data on multiple sensors connected to the robot. The two groups of resource data are used to control walking of the robot.

Persons skilled in the art may understand that the units in the resource apparatus and client described in the present invention may be each processor or may be hardware. In addition, the accompanying drawings illustrate only exemplary embodiments of the present invention and the modules or processes in the accompanying drawings may be not necessary for the implementation of the present invention.

Persons skilled in the art should understand that the modules in the apparatuses provided in the embodiments may be arranged in the apparatuses in a distributed manner according to the description of the embodiments, or may be arranged in one or more apparatuses which are different from those described in the embodiments. The modules in the foregoing embodiments may be combined into one module, or split into multiple sub-modules.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solution described in the foregoing embodiments or make equivalent replacements to some technical features thereof; without departing from the spirit and scope of the technical solution of the embodiments of the present invention.

## Claims

1. A method for acquiring machine-to-machine resources, comprising the following steps:
receiving a resource acquisition request sent by a client, and acquiring multiple resource identifiers according to the resource acquisition request;
acquiring resource data on resource devices corresponding to the multiple resource identifiers; and
encapsulating the acquired resource data into a message and sending the message to the client.

2. The method according to claim 1, wherein:
the resource acquisition request comprises mnemonic symbols of the resource identifiers; and
the acquiring multiple resource identifiers according to the resource acquisition request comprises:
searching, according to the mnemonic symbols of the resource identifiers, for the resource identifiers corresponding to the mnemonic symbols of the resource identifiers.

3. The method according to claim 1, wherein: the resource acquisition request comprises the multiple resource identifiers; and
the acquiring multiple resource identifiers according to the resource acquisition request comprises: parsing the resource acquisition request to acquire the multiple resource identifiers.

4. The method according to claim 1, wherein: the resource acquisition request comprises a group identifier of a group to which the multiple resource identifiers belong; and
the acquiring multiple resource identifiers according to the resource acquisition request comprises: parsing the group identifier of the group to which the multiple resource identifiers belong in the resource acquisition request, and acquiring the multiple resource identifiers corresponding to the group identifier of the group to which the resource identifiers belong.

5. The method according to claim 1 or 2 or 3 or 4, comprising:
receiving the resource data reported by the resource devices corresponding to the resource identifiers; wherein
the acquiring resource data on resource devices corresponding to the multiple resource identifiers comprises:
determining the received resource data reported by the resource devices corresponding to the resource identifiers, as the resource data on the resource devices corresponding to the resource identifiers.

6. The method according to claim 1 or 2 or 3 or 4, further comprising:
setting, for the resource devices corresponding to the multiple resource identifiers, a validity period of returning the resource data; wherein
the encapsulating the acquired resource data into a message and sending the message to the client comprise:
encapsulating the resource data that is returned by the resource devices corresponding to the resource identifiers and received within the validity period into the message and sending the message to the client.

7. The method according to claim 1 or 2 or 3 or 4, wherein:
before receiving the resource acquisition request sent by the client, the method further comprises:
receiving a resource device metadata acquisition request sent by the client; and
acquiring resource device metadata according to the resource device metadata acquisition request, and sending the resource device metadata to the client.

8. The method according to claim 7, wherein:
the resource device metadata comprises the group identifier of the group to which the resource identifiers belong.

9. A method for acquiring machine-to-machine resources, comprising the following steps:
receiving a resource data subscription request sent by a client, and acquiring multiple resource identifiers according to the resource data subscription request;
acquiring resource data on resource devices corresponding to the multiple resource identifiers; and
encapsulating the acquired resource data into a message and sending the message to the client.

10. The method according to claim 9, wherein: the resource data subscription request comprises multiple resource identifiers; and
the acquiring multiple resource identifiers according to the resource data subscription request comprises: parsing the resource data subscription request to acquire the multiple resource identifiers.

11. The method according to claim 9, wherein:
the resource data subscription request comprises a group identifier of a group to which the multiple resource identifiers belong; and
the acquiring multiple resource identifiers according to the resource data subscription request comprises: parsing the group identifier of the group to which the multiple resource identifiers belong in the resource data subscription request, and acquiring the multiple resource identifiers corresponding to the group identifier of the group to which the resource identifiers belong.

12. The method according to claim 9, wherein:
the resource data subscription request comprises mnemonic symbols of the resource identifiers; and
the acquiring multiple resource identifiers according to the resource acquisition request comprises:
searching, according to the mnemonic symbols of the resource identifiers, for the resource identifiers corresponding to the mnemonic symbols of the resource identifiers.

13. The method according to claim 9 or 10 or 11 or 12, wherein:
the resource data subscription request comprises a subscription rule; and
acquiring, according to the resource data subscription request, the resource data on resource devices corresponding to the multiple resource identifiers, comprises:
acquiring, according to the resource data subscription rule, the resource data on the resource devices corresponding to the multiple resource identifiers.

14. The method according to claim 13, wherein:
the subscription rule comprises: when the resource data corresponding to a subscribed resource identifier changes, acquiring changed resource data; and
acquiring, according to the resource data subscription request, the resource data corresponding to the multiple resource identifiers, comprises: monitoring, according to the resource data subscription rule, whether the resource data on the resource device corresponding to each resource identifier changes, and when the resource data on the resource device corresponding to the resource identifier changes, acquiring the changed resource data.

15. The method according to claim 13, wherein:
the subscription rule comprises: when a difference before and after a change of the resource data on a resource device corresponding to the subscribed resource identifier exceeds a set value, acquiring changed resource data; and
the acquiring, according to the resource data subscription request, the resource data corresponding to the multiple resource identifiers, comprises: monitoring, according to the resource data subscription rule, whether the resource data on the resource device corresponding to each resource identifier changes, and when the monitored resource data on the resource device corresponding to the resource identifier changes and the difference of the resource data before and after the change exceeds the set value, acquiring the changed resource data.

16. The method according to claim 13, wherein:
the subscription rule comprises: when a value of the resource data on a resource device corresponding to the subscribed resource identifier is within a set range or beyond a set range, acquiring changed resource data of the resource device; and
the acquiring resource data corresponding to the multiple resource identifiers comprises:
monitoring, according to the resource data subscription rule, whether the resource data on the resource device corresponding to each resource identifier changes, and when the monitored resource data on the resource device corresponding to the resource identifier changes and a value of the changed resource data is within the set range or beyond the set range, acquiring the changed resource data of the resource device.

17. The method according to claim 13, wherein:
the subscription rule comprises: when change time of a value of the resource data on a resource device corresponding to the subscribed resource identifier is greater than a set time value, acquiring changed resource data of the resource device; and
the acquiring resource data corresponding to the multiple resource identifiers comprises:
monitoring, according to the resource data subscription rule, whether the resource data on the resource device corresponding to each resource identifier changes, and when the monitored resource data on the resource device corresponding to the resource identifier changes and change duration of the resource data is greater than the set time value, acquiring the changed resource data of the resource device.

18. The method according to claim 9 or 10 or 11 or 12 or 13, comprising:
setting, for the resource devices corresponding to the multiple resource identifiers, a validity period of returning the resource data; and
the encapsulating the acquired resource data into a message and sending the message to the client comprise:
encapsulating the resource data that is returned by the resource devices corresponding to the resource identifiers and received within the validity period into the message and sending the message to the client.

19. The method according to claim 9 or 10 or 11 or 12 or 13, wherein:
before receiving the resource data subscription request sent by the client, the method further comprises:
receiving a resource device metadata acquisition request sent by the client; and
acquiring the resource device metadata according to the resource device metadata acquisition request, and sending the resource device metadata to the client.

20. The method according to claim 19, wherein:
the resource device metadata comprises the group identifier of the group to which the resource identifiers belong.

21. A method for acquiring machine-to-machine resources, comprising:
sending a resource acquisition request to a server, so that the server acquires multiple resource identifiers according to the resource acquisition request; and
receiving resource data, returned by the server, on devices corresponding to the multiple resource identifiers;
wherein the resource data is acquired by the server, according to the multiple resource identifiers, from the resource devices corresponding to the multiple resource identifiers.

22. The method according to claim 21, wherein: the resource acquisition request comprises the multiple resource identifiers; and
the acquiring multiple resource identifiers according to the resource acquisition request comprises: parsing the resource acquisition request to acquire the multiple resource identifiers.

23. The method according to claim 21, wherein:
the resource acquisition request comprises a group identifier of a group to which the multiple resource identifiers belong; and
the acquiring multiple resource identifiers according to the resource acquisition request comprises: parsing, by the server, the group identifier of the group to which the multiple resource identifiers belong, and acquiring the multiple resource identifiers corresponding to the group identifier of the group to which the resource identifiers belong.

24. A method for acquiring machine-to-machine resources, comprising:
sending a resource data subscription request to a server, so that the server acquires multiple resource identifiers according to the resource data subscription request; and
receiving resource data, returned by the server, on devices corresponding to the multiple resource identifiers;
wherein the resource data is acquired by the server, according to the acquired multiple resource identifiers, from the resource devices corresponding to the multiple resource identifiers.

25. The method according to claim 24, wherein: the resource data subscription request comprises the multiple resource identifiers; and
the acquiring multiple resource identifiers according to the resource data subscription request comprises: parsing the resource data subscription request to acquire the multiple resource identifiers.

26. The method according to claim 24, comprising:
acquiring, according to the resource data subscription request, a group identifier of a group to which the multiple resource identifiers belong; and
the acquiring multiple resource identifiers according to the resource acquisition request comprises: parsing, by the server, the group identifier of the group to which the multiple resource identifiers belong, and acquiring the multiple resource identifiers corresponding to the group identifier of the group to which the resource identifiers belong.

27. A resource apparatus, comprising:
a first receiving unit, configured to receive a resource acquisition request sent by a client, and acquire multiple resource identifiers according to the resource acquisition request;
a resource acquiring unit, configured to acquire resource data on resource devices corresponding to the multiple resource identifiers; and
a first sending unit, configured to encapsulate the acquired resource data into a message and send the message to the client.

28. The resource apparatus according to claim 27, wherein the apparatus further comprises a parsing unit, wherein:
the resource acquisition request received by the first receiving unit comprises mnemonic symbols of the resource identifiers; and
the parsing unit is configured to search, according to the mnemonic symbols of the resource identifiers, for the resource identifiers corresponding to the mnemonic symbols of the resource identifiers, and send the acquired multiple resource identifiers to the resource acquiring unit.

29. The resource apparatus according to claim 27, wherein the apparatus further comprises a parsing unit, wherein:
the resource acquisition request received by the first receiving unit comprises the multiple resource identifiers; and
the parsing unit is configured to parse the resource acquisition request to acquire the multiple resource identifiers.

30. The resource apparatus according to claim 27, wherein the apparatus further comprises a parsing unit, wherein:
the resource acquisition request received by the first receiving unit comprises a group identifier of a group to which the multiple resource identifiers belong; and
the parsing unit is configured to parse the group identifier of the group to which the multiple resource identifiers belong in the resource acquisition request, acquire the multiple resource identifiers corresponding to the group identifier of the group to which the resource identifiers belong, and send the acquired multiple resource identifiers to the resource acquiring unit.

31. The resource apparatus according to claim 30, wherein:
before receiving the resource acquisition request sent by the client, the apparatus further comprises:
further receiving, by the first receiving unit, a resource device metadata acquisition request sent by the client; and
acquiring, by the resource acquiring unit, the resource device metadata according to the resource device metadata acquisition request, and sending the resource device metadata to the client, wherein the resource device metadata comprises the group identifier of the group to which the resource identifiers belong.

32. A resource apparatus, comprising:
a first receiving unit, configured to receive a resource data subscription request sent by a client, and acquire multiple resource identifiers according to the resource data subscription request;
a resource acquiring unit, configured to acquire, according to the acquired multiple resource identifiers, resource data on resource devices corresponding to the multiple resource identifiers; and
a first sending unit, configured to encapsulate the acquired resource data into a message and send the message to the client.

33. The resource apparatus according to claim 32, further comprising a parsing unit, wherein:
the resource data subscription request received by the first receiving unit comprises the multiple resource identifiers; and
the parsing unit is configured to parse the resource data subscription request to acquire the multiple resource identifiers.

34. The resource apparatus according to claim 32, further comprising a parsing unit, wherein:
the resource data subscription request received by the first receiving unit comprises a group identifier of a group to which the multiple resource identifiers belong; and
the parsing unit is configured to parse the group identifier of the group to which the multiple resource identifiers belong in the resource data subscription request, and acquire the multiple resource identifiers corresponding to the group identifier of the group to which the resource identifiers belong.

35. The resource apparatus according to claim 32, further comprising a parsing unit, wherein:
the resource data subscription request received by the first receiving unit comprises mnemonic symbols of the resource identifiers; and
the parsing unit is configured to search, according to the mnemonic symbols of the resource identifiers, for the resource identifiers corresponding to the mnemonic symbols of the resource identifiers.

36. The resource apparatus according to claim 32 or 33 or 34 or 35, further comprising a monitoring unit, wherein:
the resource data subscription request received by the first receiving unit comprises a subscription rule; and
the monitoring unit is configured to monitor whether the resource data on the resource devices corresponding to the multiple resource identifiers satisfies the subscription rule, and when the subscription rule is satisfied, instruct the resource acquiring unit to acquire resource data from a resource device whose resource data satisfies the subscription rule.

37. The resource apparatus according to claim 36, wherein:
the subscription rule comprises: when the resource data corresponding to the subscribed resource identifier changes, acquiring changed resource data; and
the monitoring unit is further configured to monitor, according to the resource data subscription rule, whether the resource data on the resource device corresponding to each resource identifier changes, and when the resource data on the resource device corresponding to the resource identifier changes, instruct the resource acquiring unit to acquire the resource data from the resource device whose resource data is changed.

38. The resource apparatus according to claim 36, wherein:
the subscription rule comprises: when a difference before and after a change of the resource data on a resource device corresponding to the subscribed resource identifier exceeds a set value, acquiring changed resource data; and
the monitoring unit is further configured to monitor, according to the resource data subscription rule, whether the resource data on the resource device corresponding to each resource identifier changes, and when the monitored resource data on the resource device corresponding to the resource identifier changes and the difference of the resource data before and after the change exceeds the set value, instruct the resource acquiring unit to acquire the resource data from the resource device on which the difference of the resource data before and after the change exceeds the set value.

39. The resource apparatus according to claim 36, wherein:
the subscription rule comprises: when a value of the resource data on a resource device corresponding to the subscribed resource identifier is within a set range or beyond a set range, acquiring changed resource data of the resource device; and
the monitoring unit is further configured to monitor, according to the resource data subscription rule, whether the resource data on the resource device corresponding to each resource identifier changes, and when the monitored resource data on the resource device corresponding to the resource identifier changes and a value of the changed resource data is within the set range or beyond the set range, acquire the changed resource data of the resource device.

40. The resource apparatus according to claim 36, wherein:
the subscription rule comprises: when change time of a value of the resource data on a resource device corresponding to the subscribed resource identifier is greater than a set time value, acquiring changed resource data of the resource device; and
the monitoring unit is further configured to monitor, according to the resource data subscription rule, whether the resource data on the resource device corresponding to each resource identifier changes, and when the monitored resource data on the resource device corresponding to the resource identifier changes and change time of the resource data is greater than the set time value, acquire the changed resource data of the resource device.

41. A client for acquiring machine-to-machine resources, comprising:
a second sending unit, configured to send a resource acquisition request to a server, so that the server acquires multiple resource identifiers according to the resource acquisition request; and
a second receiving unit, configured to receive resource data, returned by the server, on devices corresponding to the multiple resource identifiers;
wherein the resource data is acquired by the server, according to the multiple resource identifiers, from the resource devices corresponding to the multiple resource identifiers.

42. The client according to claim 41, wherein:
the resource acquisition request sent by the second sending unit to the server comprises the multiple resource identifiers; and
the acquiring multiple resource identifiers according to the resource acquisition request comprises: parsing, by the server, the resource acquisition request to acquire the multiple resource identifiers.

43. The client according to claim 41, wherein:
the resource acquisition request sent by the second sending unit to the server comprises a group identifier of a group to which the multiple resource identifiers belong; and
the acquiring multiple resource identifiers according to the resource acquisition request comprises: parsing, by the server, the group identifier of the group to which the multiple resource identifiers belong, and acquiring the multiple resource identifiers corresponding to the group identifier of the group to which the resource identifiers belong.

44. A client for acquiring machine-to-machine resources, comprising:
a second sending unit, configured to send a resource data subscription request to a server, so that the server acquires multiple resource identifiers according to the resource data subscription request; and
a second receiving unit, configured to receive resource data, returned by the server, on devices corresponding to the multiple resource identifiers;
wherein the resource data is acquired by the server, according to the multiple resource identifiers, from the resource devices corresponding to the multiple resource identifiers.

45. The method according to claim 44, wherein:
the resource data subscription request sent by the second sending unit to the server comprises the multiple resource identifiers; and
the acquiring multiple resource identifiers according to the resource data subscription request comprises: parsing, by the server, the resource data subscription request to acquire the multiple resource identifiers.

46. The client according to claim 44, wherein:
the resource acquisition request sent by the second sending unit to the server comprises a group identifier of a group to which the multiple resource identifiers belong; and
the acquiring multiple resource identifiers according to the resource acquisition request comprises: parsing, by the server, the group identifier of the group to which the multiple resource identifiers belong, and acquiring the multiple resource identifiers corresponding to the group identifier of the group to which the resource identifiers belong.
